# EUROPÄISCHE PATENTSCHRIFT

(11) **EP 0 831 662 B1**
(45) Veröffentlichungstag und Bekanntmachung des Hinweises auf die Patenterteilung: **13.11.2002**
(21) Anmeldenummer: 97440082.2
(22) Anmeldetag: 22.09.1997
(51) Int. Cl.: H04Q 3/00, H04Q 3/47

(54) **Verfahren zur Durchführung von Änderungen in einer Nummernverwaltung**
Method for implementing changes in a telephone number administration
Procédé de mise en oeuvre de changements dans une gestion de numéros

(30) Priorität: 20.09.1996 DE 19638823
(43) Veröffentlichungstag der Anmeldung: 25.03.1998
(73) Patentinhaber: ALCATEL, 75008 Paris (FR)
(72) Erfinder: Lautenschlager, Wolfgang, 71287 Weissach-Flacht (DE); Stahl, Uwe, 71229 Leonberg (DE)
(74) Vertreter: Rausch, Gabriele, Dr.

(56) Entgegenhaltungen:
- WO-A-96/15633
- GB-A- 2 263 845
- PATENT ABSTRACTS OF JAPAN vol. 014, no. 051 (E-0881), 30. Januar 1990 (1990-01-30) & JP 01 278152 A (NEC CORP), 8. November 1989 (1989-11-08)

## Beschreibung

Die Erfindung betrifft ein Verfahren zur Durchführung von Änderungen in einer Nummernverwaltung nach dem Oberbegriff von Anspruch 1, und eine Nummernverwaltungseinrichtung nach dem Oberbegriff von Anspruch 11.

Eine für das Betreiben von Kommunikationsnetzen wichtige Aufgabe besteht in der Nummernverwaltung. Darunter ist die Verwaltung der Zuordnung von Teilnehmeranschlüssen zu Rufnummern zu verstehen, d. h. die Verwaltung der Adressierung von Teilnehmerendgeräten in Kommunikationsnetzen.

In dem Artikel "System 12, Betrieb und Wartung" von E. Bertoli et al., Elektrisches Nachrichtenwesen Band 56, Nummer 2/3, 1981, S. 184 bis 197 ist eine Realisierung einer Nummernverwaltung für einen Teil eines Fernsprechnetzes beschrieben. Die Erfindung geht von dieser Realisierung einer Nummernverwaltung aus.

Die Zuordnung von Rufnummern zu den Teilnehmeranschlüssen einer oder mehrerer Vermittlungsstellen wird von einem zentralen Betriebs- und Wartungszentrum gesteuert. Diese Zuordnung wird hierbei durch Sperren und Freigeben von Teilnehmeranschlußleitungen und Veränderung der Leitweglenkungstabellen der Vermittlungsstellen verändert. Das Ausführen einer solchen Änderung wird durch die Eingabe eines entsprechenden Änderungsauftrages durch das Bedienungspersonal des Betriebs- und Wartungszentrums bewirkt.

Die Durchführung solcher Änderungen stellt eine Management-Aufgabe des Netzbetreibers dar, an die hohe Sicherheitsanforderungen gestellt werden. Deshalb ist die Eingabe eines solchen Änderungsauftrages nur von bestimmten Bedienungsterminals des Bedienungs- und Wartungszentrums aus möglich und das Bedienungspersonal hat sich durch Paßwörter zu autorisieren.

Probleme bei dieser Art der Durchführung von Änderungen der Zuordnung von Rufnummern ergeben sich hierbei, wenn vor der Durchführung der Änderung Arbeiten durch Monteure vor Ort bei dem entsprechenden Teilnehmeranschluß notwendig sind.

Dies ist insbesondere der Fall in einem deregulierten Teilnehmeranschlußbereich, in dem sich die Teilnehmeranschlußnetze von zwei oder mehreren Netzbetreibern den Teilnehmeranschlußbereich und somit auch den Nummerierungsbereich des Teilnehmeranschlußbereiches teilen. Wenn ein Teilnehmer von einem der Netzbetreiber zu einem anderen der Netzbetreiber wechselt, hat ein Monteur das Teilnehmerendgerät des Teilnehmers von einem Teilnehmeranschluß des Teilnehmeranschlußnetzes des einen Netzbetreibers auf einen des anderen Netzbetreibers umzuklemmen. In der Zeitspanne zwischen dem Umklemmen und der Eingabe der Änderungsaufträge durch das Bedienungspersonal der Bedienund Wartungszentren der Teilnehmeranschlußnetze ist der Teilnehmer nicht erreichbar.

Im Patent Abstract of Japan vol. 014, no.051 (E-0881), 30.01.1990 ist weiter ein System zum Verwalten von Teilnehmernummern beschrieben, bei dem eine Änderung einer Teilnehmernummer nicht notwendig ist, wenn ein Teilnehmer in den Bereich eines anderen Netzwerks umzieht. Das System besteht aus einer Vielzahl von Nummernverwaltungs-Stationen. Ein gerufener Teilnehmer wird bei diesem System von den Nummerverwaltungsstationen ermittelt, bevor die Verbindung zwischen rufenden und gerufenen Teilnehmern aufgebaut wird.

In GB-A-2263845 wird ein UPT Dienst (UPT = Universal Personal Telecommunication) beschrieben. Dieser Dienst wertet eine gerufene persönliche Rufnummer in eine Fernsprechrufnummer um. Diese Umwertung kann von dem Teilnehmer verändert werden, in dem er die Nummer eines speziellen Änderungs-Dienstes anwählt. Nach Anwahl des Änderungs-Dienstes wird der Teilnehmer von dem Dienst zur Eingabe aufgefordert. Wenn der Teilnehmer daraufhin seine persönliche Rufnummer und eine zu ändernde Fernsprechrufnummer eingibt, so werden diese Daten in die Umwertetabelle des UPT Dienstes übernommen.

Der Erfindung liegt die Aufgabe zugrunde, eine Realisierung für die Durchführung von Änderungen in der Zuordnung von Rufnummern zu Teilnehmeranschlüssen mit hoher Teilnehmer-Erreichbarkeit anzugeben.

Die Aufgabe wird gelöst durch ein Verfahren zur Durchführung von Änderungen in einer Nummernverwaltung nach der Lehre von Anspruch 1, und eine Nummernverwaltungseinrichtung nach der Lehre von Anspruch 11.

Der Grundgedanke der Erfindung ist, daß ein Änderungsauftrag in eine Nummernverwaltung eingetragen wird, die Durchführung dieses Änderungsauftrages jedoch erst beim Empfang einer Trigger-Nachricht erfolgt, die von einem Teilnehmer-Endgerät an die Rufnummernverwaltung gesendet wird. Dadurch wird die Eingabe eines Auftrages, die sicherheitskritisch ist und korrekt erfolgen muß, von der Ausführung des Auftrages entkoppelt. Die Trigger-Nachricht wird beispielsweise von einem Monteur unmittelbar nach dem Umklemmen der Teilnehmeranschlußleitung eines Endgerätes mittels eines Teilnehmerendgerätes an die Nummernverwaltung gesendet. Dadurch kann das Ausführung des Auftrages und damit die Veränderung der Vermittlungsfunktion unmittelbar nach der zugehörigen Veränderung der physikalischen Anschlußleitung erfolgen. Die Teilnehmer-Erreichbarkeit wird damit verbessert.

Ein weiterer Vorteil der Erfindung ist, daß sowohl der Zeitpunkt der Eingabe eines Auftrages als auch das Umklemmen vor Ort durch die Entkopplung flexibilisiert wird.

Vorteilhaft ist die Anwendung dieser Erfindung auf die Rufnummernverwaltung in einem deregulierten Teilnehmeranschlußbereich, insbesondere wenn Rufnummernportabilität gefördert ist.

Im Folgenden wird die Erfindung anhand eines Ausführungsbeispiels unter Zuhilfenahme beiliegender Zeichnungen beispielhaft erläutert.
- Fig. 1: zeigt ein Blockschaltbild eines Kommunikationssystems mit einer erfindungsgemäßen Nummernverwaltungseinrichtung.
- Fig. 2: zeigt ein detailliertes Blockschaltbild eines Ausschnittes aus dem Kommunikationssystem nach Fig. 1.

In dem Ausführungsbeispiel wird nun die Durchführung der erfindungsgemäßen Verfahren zur Durchführung von Änderungen in einer Nummernverwaltung und zur Bereitstellung eines Nummernverwaltungsdienstes in einer Kommunikationsumgebung mit einer erfindungsgemäßen Nummernverwaltungseinrichtung erläutert.

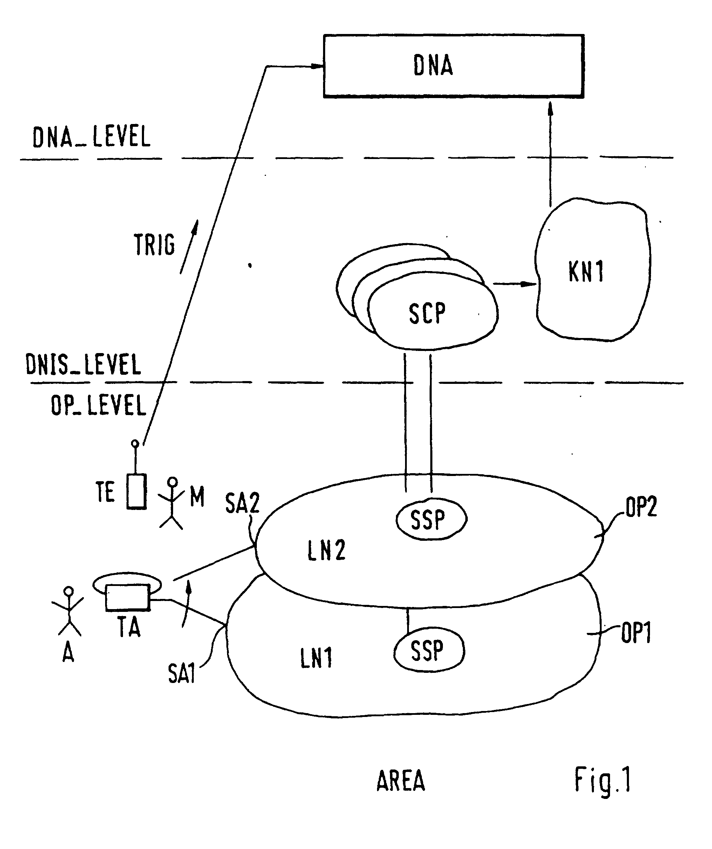

Fig. 1 zeigt einen Ausschnitt aus einem Kommunikationssystems mit den drei Ebenen DNA_LEVEL, DNIS_LEVEL und OP_LEVEL,

Die Ebenen OP_LEVEL stellt die Netzbetreiber-Ebene dar und umfaßt als solche insbesondere die Kommunikationsnetze des Kommunikationssystems. Diese Kommunikationsnetze sind unterschiedlichen Netzbetreibern zugeordnet. Die Ebene DNIS_LEVEL stellt die Diensterbringungs-Ebene dar. Sie umfaßt die Dienststeuereinrichtungen, die Dienste in den Kommunikationsnetzen des Kommunikationssystems erbringen. Die Dienste können hierbei unterschiedlichen Dienst-Betreibern zugeordnet sein. Die Ebene DNA_LEVEL stellt die Nummernverwaltungseben dar. Sie stellt im Kommunikationssystem einen zentralen Nummernverwaltungsdienst bereit, der die Zuordnung von Rufnummern zu Teilnehmeranschlüsse für alle oder für einen Teil der Kommunikationsnetze des Kommunikationssystems verwaltet. Diese Ebene kann auch mehrere solcher Nummernverwaltungsdienste umfassen, die unterschiedlichen Nummernverwaltungs-Betreibern zugeordnet sind.

In dem im folgenden dargestellten Ausführungsbeispiel wird die Nummernverwaltung für Kommunikationsnetze der Ebene OP_LEVEL zentral von einem Nummernverwaltungsdienst der Ebene DNA_LEVEL erbracht. Für die Umsetzung der in dem Nummernverwaltungsdienst verwalteten Zuordnung werden Diensten der Ebenen DNIS_LEVEL verwendet.

Von den Komponenten der Ebene OP_LEVEL sind in Fig. 1 beispielhaft ein Teilnehmeranschlußnetzbereich AREA mit zwei Teilnehmeranschlußnetzen LN1 und LN2 und zwei Teilnehmerendgeräten TE und TA gezeigt. Das Endgerät TA ist dem Teilnehmer A und das Endgerät TE einem Monteur M zugeordnet.

Bei den Teilnehmeranschlußnetzen LN1 und LN2 handelt es sich um Anschlußnetze für den Anschluß von Fernsprechendgeräten und Nebenstellenanlagen. Mögliche an die Teilnehmeranschlußnetze LN und LN2 anschließbare Fernsprechendgeräte sind hierbei Telefone, Faxgeräte, aber auch Modems und Schnittstellenkarten für den Anschluß von Datenverarbeitungsanlagen. Bei dem Endgerät TA handelt es sich um ein solches Endgerät.

Die Teilnehmeranschlußnetzen LN1 und LN2 sind zwei unterschiedlichen Anschlußnetzbetreibern OP1 und OP2 zugeordnet und werden jeweils von einer oder von mehreren Teilnehmervermittlungsstellen gebildet. Alle Endgeräte von Teilnehmern, die einem der Teilnehmeranschlußnetze LN1 und LN2 zugeordnet sind, sind über eine Teilnehmeranschlußleitung mit einem Teilnehmeranschluß der Teilnehmervermittlungsstelle des jeweiligen Teilnehmeranschlußnetzes verbunden. Größere Teilnehmeranschlußnetze können aufgrund der höheren Verkehrsbelastung auch Transitvermittungsstellen enthalten. Die Vermittlungsstellen eines der Teilnehmeranschlußnetze LN1 und LN2 sind über Querleitungen untereinander und mit einer oder mit mehreren Transitvermittlungsstellen von hier nicht gezeigten Fernnetzen verbunden, die unterschiedlichen Fernnetz-Betreiberen zugeordnet sind. Auch Querverbindungen zu den anderen Teilnehmervermittlungsstellen des Teilnehmeranschlußbereiches AREA sind möglich.

Von den Vermittlungsstellen der Teilnehmeranschlußnetze LN1 sind jeweils eine Vermittlungsstelle SSP1 bzw. SSP2 gezeigt. Bei diesen Vermittlungsstellen handelt es sich um speziell ausgestaltete Vermitllungsstellen, um Dienstvermittlungsstellen, die in dem jeweiligen Teilnehmeranschlußnetz den Zugang zu Diensten ermöglichen. Einer der von ihnen erbrachten Dienste dienen hierbei dazu, eine Verbindungsanforderung zu demjenigen von mehreren Teilnehmeranschlußnetzen in einem Teilnehmeranschlußnetzbereich umzuleiten, dem der in der Verbindungsanforderung durch seine Rufnummer bezeichnete Teilnehmeranschluß zugeordnet ist. Jede in dem Teilnehmeranschlußnetzbereich generierte Verbindungsanforderung wird hierbei zur Umwertung zu diesen Dienstvermittlungsstellen geleitet.

Es ist jedoch auch möglich, daß nur an bestimmte Ziele gerichtete Verbindungsanforderungen zur Umwertung an Dienststeuereinrichtungen geleitet werden. Insbesondere können nur solche Verbindungsanforderung an eine Dienststeuereinrichtung geleitet werden, die an ein Endgerät eines Teilnehmeranschlußbereiches gerichtet sind, den sich die Teilnehmeranschlußnetze mehrerer unterschiedlicher Netzbetreiber teilen.

Neben den Teilnehmeranschlußnetzen LN1 und LN2 können auch Teilnehmeranschlußnetze anderer Teilnehmeranschlußnetzbereiche oder ein oder mehrere Fernnetze mit Dienstvermittlungsstellen ausgestattet sein, die obigen Dienst bereitstellen.

Ein Verbindungsaufbau zwischen Endgeräten des Kommunikationssystems erfolgt über die Kommunikationsnetze der Ebene OP_LEVEL. Während des Verbindungsaufbaus erfolgt eine Umwertung der Rufnummer durch einen von der Ebene DNIS_LEVEL erbrachten Dienst. Die Zuordnung zwischen dem Teilnehmeranschluß, zu dem die Verbindung aufgebaut wird und der gewählten Rufnummer in der vorausgehenden Verbindungsanforderung wird hierbei durch diese Umwertung gemäß einer in dem Dienst festgelegten Zuordnung festgelegt.

Die Ebene DNIS_LEVEL weist mehrere Dienststeuereinrichtungen SCP und ein Kommunikationsnetz KN1 auf.

Die Dienststeuereinrichtungen SCP dienen der Erbringung der von den Dienstvermittlungsstellen SSP1 und SSP2 bereitgestellten Dienste. Sie sind gemäß der IN-Architektur (IN = Intelligent Network) aufgebaut und arbeiten gemäß dieser Architektur mit den ihnen zugeordneten Dienstvermittlungsstellen zusammen, von denen hier nur die Dienstvermittlungsstellen SSP1 und SSP2 gezeigt sind. Mit jeder Dienststeuereinrichtung SCP sind ein oder mehrere Dienstvermittlungsstellen verbunden, die auch Teilnehmeranschlußnetzen oder Fernnetzen verschiedener Netzbetreiber zugeordnet sein können. In der Regel ist jedoch eine Dienststeuereinrichtung für ein Netz oder einen Netzbereich eines Netzbetreibers zuständig.

Die Dienststeuereinrichtungen SCP verfügen für die Erbringung der Dienste jeweils über eine Datenbank und eine Steuerlogik.

In der Datenbank ist eine Zuordnung von Rufnummern zu Teilnehmeranschlüssen abgelegt. Eine solche Zuordnung besteht beispielsweise aus einer Liste mit logischen Teilnehmer-Rufnummern, denen jeweils ein oder mehrere physikalische Teilnehmerrufnummern zugeordnet sind. Aus einer solchen physikalischen Teilnehmer-Rufnummer ist hierbei die physikalische Adresse des Teilnehmeranschlusses erkennbar, beispielsweise dasjenige Teilnehmeranschlußnetz eines Teilnehmeranschlußnetzbereiches, dem der Teilnehmeranschluß zugeordnet ist und diejenige Vermittlungsstelle innerhalb dieses Teilnehmeranschlußnetzes, die den Teilnehmeranschluß bereitstellt.

Mittels der Datenbank bestimmen die Steuerlogik aus der einer Verbindungsanforderung zugeordneten Teilnehmernummern eine physikalische Teilnehmernummer und gibt diese physikalische Rufnummer als umgewertete Rufnummer an die entsprechende Dienstvermittlungsstelle zurück. Aus dieser umgewerteten Rufnummer ist insbesondere dasjenige Teilnehmeranschlußnetz eines Teilnehmeranschlußnetzbereichs zu erkennen, das über den adressierten Teilnehmeranschluß verfügt. Durch die Einbindung eines Dienstes mit solch einer Datenbank in die Leitweglenkung ist die Zuordnung von Rufnummer zu Teilnehmeranschlußnetzen eines Teilnehmeranschlußnetzbereiches frei wählbar, in dem Nummerierungsbereich des Teilnehmeranschlußbereiches ist somit eine frei Rufnummernportabilität zwischen den in diesem Teilnehmeranschlußnetzbereich vorhandenen Netzbetreibern möglich. Die Zuordnung der Rufnummern eines solchen Teilnehmeranschlußbereiches zu den Teilnehmeranschlüssen dieser unterschiedlichen Teilnehmeranschlußnetze erfolgt hierbei gemäß der in den Datenbanken der Dienststeuereinrichtungen SCP abgelegten Zuordnung, der von den Dienstvermittlungsstellen SSP1 und SSP2 und den Dienststeuereinrichtungen SCP bereitgestellte Dienst dient zur Umsetzung dieser Zuordnung beim Verbindungsaufbau.

Das Kommunikationsnetz KN1 ist ein Datennetz, beispielsweise ein X.25 Netz oder ein Nr. 7 Signalisierungsnetz. Es ist hierbei vorteilhaft, daß die Kommunikation zwischen den Dienststeuereinrichtungen SCP und der Nummernverwaltungseinrichtung über eine Dienstverwaltungseinrichtung, die damit Teil des Kommunikationsnetzes KN1 wäre, geführt wird. Diese Dienstverwaltungseinrichtung würde die Funktionen eines Service Management Points (SMP) gemäß der IN-Architektur erbringen.

Die Ebene DNA_LEVEL weist einen Nummernverwaltungseinrichtung DNA auf, der über das Kommunikationsnetz KN1 mit den Dienststeuereinrichtungen SCP verbunden ist.

Der Nummernverwaltungseinrichtung DNA weist eine Datenbank auf, in der eine Zuordnung von Rufnummern zu Teilnehmeranschlüssen abgespeichert ist. Über das Kommunikationsnetz KN1 werden die Datenbanken der Dienststeuereinrichtungen auf diese Datenbank synchronisiert, d. h. in den Datenbanken der Dienststeuereinrichtungen ist immer eine Zuordnung gemäß der in der Nummernverwaltungseinrichtung abgespeicherten Zuordnung abgespeichert. Desweiteren verwaltet die Nummernverwaltungseinrichtung DNA diese Zuordnung und führt Änderungen in dieser Zuordnung durch.

Wechselt beispielsweise der Teilnehmer A, dem das Endgerät TA zugeordnete ist in dem Teilnehmeranschlußbereich AREA vom Netzbetreiber OP1 zum Netzbetreiber OP2, so ist die Teilnehmeranschlußleitung seines Endgerätes TA von einem Teilnehmeranschluß SA1 des Teilnehmeranschlußnetzes LN1 auf einen Teilnehmeranschluß SA2 des Teilnehmeranschlußnetzes LN2 von einem Monteur M umzuklemmen.

Damit der Teilnehmer nach dem Umklemmen weiter erreichbar ist, müssen ab diesem Zeitpunkt Verbindungsanforderungen mit der Rufnummer des Teilnehmers A nicht mehr zum Teilnehmeranschluß SA1, sondern zum Teilnehmeranschluß SA2 geleitet werden. Hierfür wird in die Nummernverwaltungseinrichtung DNA ein Änderungsauftrag eingegeben, der die Änderung der Zuordnung des Teilnehmeranschlusses SA1 zu der Rufnummer des Teilnehmers A in die Zuordnung des Teilnehmeranschlusses SA2 zu dieser Rufnummer als Inhalt hat. Die Durchführung dieses Auftrages erfolgt jedoch erst auf den Empfang einer Trigger-Nachricht TRIG, die von dem Monteur M nach dem Umklemmen mittels seines Teilnehmerendgerätes TE an die Nummernverwaltungseinrichtung DNA gesendet wird.

Durch die Synchronisation der Datenbanken der Dienststeuereinrichtungen SCP auf die der Nummernverwaltungseinrichtung DNA wird diese Änderung der Zuordnung auch in diesen Datenbanken eingetragen. Bei einem Verbindungsaufbau wird die Rufnummer sodann gemäß dieser neuen Zuordnung umgewertet und somit ab sofort bei einer zu der Rufnummer des Teilnehmers A angeforderten Verbindung eine Verbindung zum Teilnehmeranschluß SA2 aufgebaut. Der Monteur kann die Trigger-Nachricht TRIG auch unmittelbar vor dem Umklemmen senden.

Es ist auch möglich, daß die Nummernverwaltungseinrichtung in eine der Dienststeuereinrichtungen SCP integriert wird und direkt Änderung der Zuordnungen in der Datenbank der Dienststeuereinrichtung durchführt. Die Datenbanken der anderen Dienststeuereinrichtungen können hierbei auf die Datenbank dieser Dienststeuereinrichtung synchronisiert werden.

Es ist weiter möglich, daß die Umsetzung der von der Nummernverwaltung DNA verwalteten Zuordnung von Teilnehmeranschlüssen zu Rufnummern von Teilnehmern in die Leitweglenkung des Verbindungsaufbaus auf andere Weise als oben beschrieben durchgeführt wird.

Eine solche weitere Möglichkeit ist, daß beim Verbindungsaufbau keine Dienste eingeschaltet werden und daß der Verbindungsaufbau allein aufgrund der Leitweglenkungstabellen in den Vermittlungsstellen des Kommunikationssystems erfolgt. In diesem Fall wäre die Nummernverwaltungseinrichtung DNA mit einer oder mehreren dieser Vermittlungsstellen zu Verbinden und eine in der Nummernverwaltungseinrichtung DNA durchgeführte Änderung der Zuordnung würde durch eine entsprechende Änderung der entsprechenden Leitweglenkungstabellen umgesetzt.

Es ist hierbei auch möglich, daß die Nummernverwaltungseinrichtung DNA in die oder in eine dieser Vermittlungsstellen integriert wird.

Eine andere Möglichkeit ist, daß in der Datenbank nur Zuordnungen für portierte Rufnummern abgespeichert sind. Dies ist der Fall, wenn in einem Teilnehmeranschlußbereich mit mehreren unterschiedlichen Teilnehmeranschlußnetzbetreibern diesen Teilnehmeranschlußnetzbetreibern Rufnummernblöcke, beispielsweise 10.000 Blöcke, fest zugeteilt werden. Portierte Rufnummern sind hier solche Rufnummern, die nicht in dieses Schema passen, bei denen also das Teilnehmeranschlußnetz mit dem zugeordneten Teilnehmeranschlußnetz nicht dem Rufnummernblock der Rufnummer entspricht. Nur wenn eine Verbindungsanforderung mit solch einer portierten Rufnummer erkannt wird, erfolgt eine Umwertung mittels der in der Datenbank abgespeicherten Zuordnung. Bei dieser Lösung ist es weiter vorteilhaft, daß die Rufnummernverwaltungseinrichtung eine Kommunikationsverbindung zu den Vermittlungsstellen aufbaut und die in der Datenbank enthaltenen portierten Rufnummern in den Vermittlungsstellen er anderen Teilnehmeranschlußnetze des zugehörigen Teilnehmeranschlußbereichs als portiert kennzeichnet.

Eine andere Möglichkeit ist, daß in den Datenbanken als Zuordnung von Teilnehmeranschlüssen zu Rufnummern eine Zuordnung von Rufmmern zu Betreibern und damit zu Teilnehmeranschlußnetzen abgespeichert ist. Aufgrund dieser Zuordnung erfolgt eine Weiterleitung einer Verbindungsanforderung in dasjenige Teilnehmeranschlußnetz, in dem der der Rufnummer zugeordnete Teilnehmeranschluß angesiedelt ist. Die pyhsikalische Teilnehmerrufnummer besteht hier beispielsweise aus der logischen Teilnehmerrufnummer und einer Betreiberkennung.

Eine andere Möglichkeit ist, daß die Nummernverwaltungseinrichtung sowohl Zugriff auf Umwerttabellen von Diensten als auch Zugriff auf Leitweglenkungstabellen in Vermittlungsstellen hat und mittels dieser beiden Einwirkmöglichkeiten die Zuordnung von Rufnummern zu Teilnehmeranschlüsse festlegt.

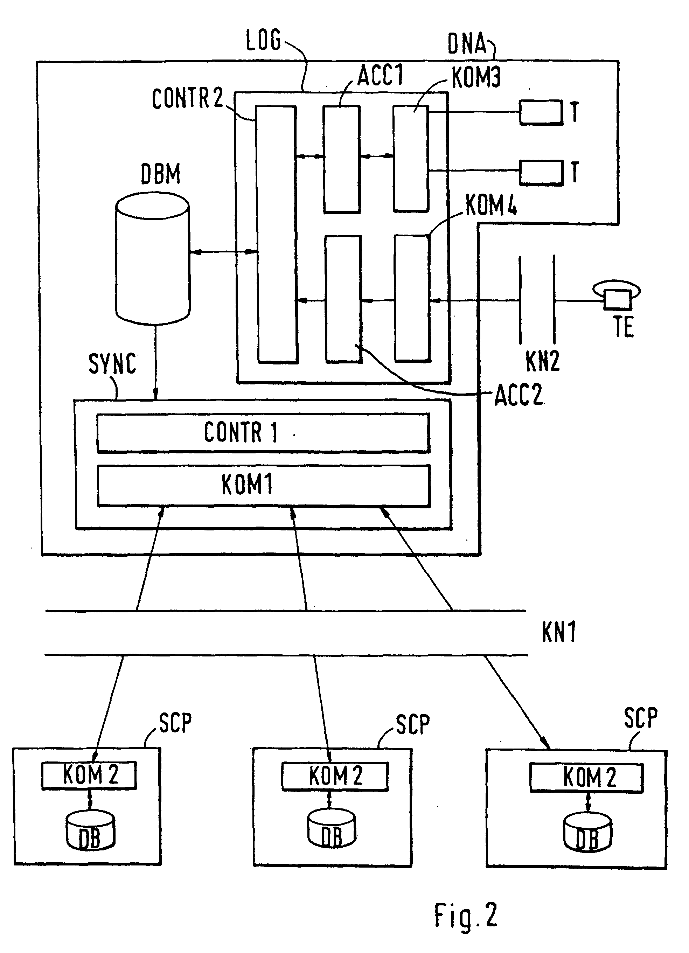

Der detaillierte Aufbau der Nummernverwaltungseinrichtung DNA wird nun anhand von Fig. 2 erläutert.

Fig. 2 zeigt die Nummernverwaltung DNA, ein Kommunikationsnetz KN2, das Endgerät TE, das Kommunikationsnetz KN1 und die Dienststeuereinrichtungen SCP.

Die Nummernverwaltungseinrichtung DNA weist eine Datenbank DBM, zwei Bedienterminal T, eine Steuereinheit LOG und eine Synchronisationseinheit SYNC auf. Die Steuereinheit LOG tauscht Daten mit den Bedienterminal T aus, empfängt Daten von dem Endgerät TE und greift lesend und schreibend auf die Daten in der Datenbank DBM zu. Die Synchronisationseinheit SYNC taucht Daten mit den Dienststeuereinheiten SCP aus und greift lesend auf die Datenbank DBM zu.

In der Datenbank DBM sind eine Vielzahl von Zuordnungen von Rufnummern von Teilnehmern zu Teilnehmeranschlüssen gespeichert. Solche Zuordnungen bestehen beispielsweise aus einer Zuordnung von logischen zu physikalischen Teilnehmernnummern oder aus einer Zuordnung von Betreiberkennungen zu logischen Teilnehmerrufnummern. Für jeden mit einem Endgerät belegten Teilnehmeranschluß des Kommunikationssystems ist eine solche Zuordnung vorhanden.

Es ist auch möglich, daß in der Datenbank DBM lediglich die Zuordnungen für eines oder mehrere der Kommunikationsnetze des Kommunikationssystem abgespeichert sind. Bei dieser Auswahl könnte es sich beispielsweise um die Kommunikationsnetze verschiedener Netzbetreiber handeln, die sich den selben Teilnehmeranschlußbereich teilen. Eine weitere Möglichkeit ist, daß es sich bei dieser Auswahl um die Kommunikationsnetze eines speziellen Nummerierungsbereiches handelt. Auch eine Auswahl nach dem Netzbetreiber ist möglich.

Es ist auch möglich; daß nur für einen Teil der Teilnehmeranschlüsse eines Kommunikationsnetzes Zuordnungen in der Datenbank DBM abgespeichert sind. Dies könnten beispielsweise diejenigen Teilnehmeranschlüsse sein, für die die logische Teilnehmerrufnummer nicht mit der physikalischen Teilnehmerrufnummer übereinstimmt.

Die Synchronisationseinheit SYNC weist eine Steuerlogik CONTR1 und eine Kommunikationseinheit KOM1 auf. Die Dienststeuereinheiten SCP weisen jeweils eine Kommunikationseinheit KOM2 und eine Datenbank DB auf.

Die Steuerlogik CONTR1 ist für die Synchronisation der Datenbanken DB auf die Datenbank DBM zuständig. Die Datenbank DBM stellt somit die Master-Datenbank für die Datenbanken DB dar.

Eine mögliches Verfahren, das die Steuerlogik CONTR1 zur Synchronisation durchführt, ist, daß sie jede Änderung von Zuordnungen in der Datenbank DBM erkennt und sogleich eine Steuernachricht mit dem Befehl der Durchführung der selben Änderung an die Datenbanken DB sendet. Es ist hier auch möglich, daß die Datenbanken DB jeweils nur einen Teil des Datenbestandes der Datenbank DBM besitzen, beispielsweise nur Zuordnungen, die einen bestimmten Nummerierungsbereich oder einen bestimmten Netzbetreiber betreffen. Die Steuernachrichten würden dann nur an diejenigen der Dienststeuereinrichtungen gesendet, in deren Datenbank DB die geänderten Zuordnungen gespeichert sind.

Die Kommunikationseinheiten KOM1 und KOM2 erbringen alle soft- und hardwaremäßigen Dienste, die für den Austausch von Steuernachrichten zwischen der Synchronisationseinheit SYNC und den Dienststeuereinrichtungen über das Kommunikationsnetz KN1 notwendig sind.

Die Steuereinheit LOG ist für das Verwalten der in der Datenbank DBM gespeicherten Zuordnungen von Rufnummern von Teilnehmern zu Teilnehmeranschlüssen zuständig. Sie weist eine Steuerlogik CONTR2, zwei Zugangseinheiten ACC1 und ACC2 und zwei Kommunikationseinheiten KOM3 und KOM4 auf.

Die Kommunikationseinheit KOM3 enthält alle Funktionsgruppen, die für den Anschluß der Bedienterminals T notwendig sind. Bei den Bedienterminals handelt es sich hierbei um Computer-Terminals oder PCs, über die Änderungsaufträge für die Änderung der Zuordnung von Rufnummern zu Teilnehmeranschlüsse oder für die Neueinrichtung einer solchen Zuordnung eingegeben werden können. Zusammen mit der Kommunikationseinheit KOM3 stellen die Bedienterminals T eine Mensch-Maschine-Schnittstelle bereit, die die Eingabe solcher Aufträge unterstützt.

Es ist auch möglich, daß die Bedienterminal T nicht Teil der Nummernverwaltungseinrichtung DNA sind und von der Nummernverwaltungseinrichtung DNA abgesetzt aufgestellt sind. Beispielsweise könnten die Bedienterminals in den Betriebsräumen der unterschiedlichen Netzbetreiber des Kommunikationssystems untergebracht sein. Die Kommunikation zwischen den Bedienterminals T und der Kommunikationseinheit KOM3 würde dann über ein oder mehrere Datenkommunkiationsnetze, beispielsweise über das INTERNET ablaufen.

Die Zugangseinheit ACC1 führt eine Sicherheitsüberprüfung für Änderungsaufträge durch. Sie überprüft, ob ein solcher Änderungsauftrag an einem dafür zugelassenen Bedienterminal T eingegeben wurde und ob vor der Eingabe eine Autorisierung durch ein dafür gültiges Paßwort erfolgt worden ist.

Die Steuerlogik CONTR2 greift auf die Datenbank DBM zu und führt Änderungsaufträge durch. Die über die Bedienterminal T eingegebenen Änderungsaufträge werden hierbei in der Steuerlogik solange zwischengespeichert, bis eine Trigger-Nachricht von der Zugangseinrichtung ACC2 empfangen wird. Erst beim Empfang dieser Trigger-Nachricht wird der Änderungsauftrag sodann durchgeführt.

Es ist auch möglich, daß auch verschiedene andere Arten von Änderungsaufträgen in die Steuereinheit LOG eingegeben werden können, von denen eine Art beispielsweise direkt durchgeführt wird und eine andere Art mit einem Ausführungszeitpunkt versehen ist und zu diesem Ausführungszeitpunkt ausgeführt ist.

Es ist weiter möglich, daß einem Ausführungsauftrag bei der Eingabe oder automatisch eine bestimmte Zeitperiode zugeordnet wird. Der Auftrag wird von der Steuerlogik im folgenden nur dann ausgeführt, wenn die Trigger-Nachricht innerhalb dieser zugeordneten Zeitperiode empfangen wird.

Die Kommunikationseinheit KOM4 stellt die Funktionen zum Aufbau einer Verbindung zwischen der Steuereinheit LOG und dem Endgerät TE über das Kommunikationsnetz KN2 bereit.

Das Kommunikationsnetz KN2 ist vorteilhaft ein Mobilfunknetz, beispielsweise nach dem GSM Standard. Es ist jedoch auch möglich, daß es sich um ein Festnetz handelt. Das Kommunikationsnetz KN2 kann auch aus mehreren Kommunikationsnetzen bestehen. Es kann sich hierbei auch um Kommunikationsnetze des Kommunikationssystems handeln.

Die Zugangseinheit ACC2 überprüft und entscheidet, ob eine über die Kommunikationseinheit KOM4 empfangene Trigger-Nachricht als ein die Ausführung eines Änderungsauftrages auslösende Trigger-Nachricht akzeptiert wird.

Jedem Ausführungsauftrag ist hierfür eine ganz bestimmte Tigger-Nachricht zugeordnet, die beispielsweise aus einer Folge von DTMF-Signalen bestehen. Eine Trigger-Nachricht wird nur akzeptiert, wenn die empfangene Trigger-Nachricht mit der zugeordneten Trigger-Nachricht übereinstimmt.

Eine Trigger-Nachricht könnte auch aus einer allgemeinen Autorisierungskennung oder Autorisierungscode und einer Auftragsnummer oder Auftragskennung bestehen, die den Änderungsauftrag bezeichnet. Stimmt die Autorisierungskennung, so wird eine solche empfangene Trigger-Nachricht als Trigger-Nachricht für den Änderungsauftrag mit der empfangenen Auftragsnummer akzeptiert.

Weiter ist es möglich, daß von der Zugangseinheit ACC2 auch der Ursprung des Rufes, also die Rufnummer des Endgerätes TE überprüft wird. Dies ist insbesondere möglich, wenn es sich bei dem Endgerät TE um ein ISDN-Endgerät (ISDN = Integrated Services Digital Network) handelt. Eine Trigger-Nachricht wird dann nur von einem oder mehreren bestimmten Endgeräten oder von den Endgeräten einer Closed User Group akzeptiert. Hierdurch kann die Sicherheit weiter erhöht werden.

## Patentansprüche

1. Verfahren zur Durchführung von Änderungen in einer Nummernverwaltung (DNA), wobei bei dem Verfahren von der Nummernverwaltung (DNA) die Zuordnung einer Vielzahl von Teilnehmeranschlüssen zu Rufnummern von Teilnehmern verwaltet wird, für die Durchführung einer Änderung dieser Zuordnung ein Änderungsauftrag in die Nummernverwaltung eingegeben wird und die Durchführung der Änderung durch die Ausführung des Änderungsauftrages in der Nummernverwaltung (DNA) bewirkt wird,
**dadurch gekennzeichnet, daß** ein Änderungsauftrag, der die Änderung der Zuordnung einer der Teilnehmeranschlüsse zu der Rufnummer eines Teilnehmers beschreibt, in der Nummernverwaltung zwischengespeichert wird, daß eine Verbindung zwischen einem Teilnehmer-Endgerät (TE) und der Nummernverwaltung (DNA) aufgebaut wird und über die aufgebaute Verbindung eine Trigger-Nachricht (TRIG) von dem Teilnehmer-Endgerät (TE) zu der Nummernverwaltung (DNA) gesendet wird und daß durch den Empfang der Trigger-Nachricht (TRIG) die Ausführung des zwischengespeicherten Änderungsauftrages, der zu einem früheren Zeitpunkt als dem Empfang der Triggernachricht (TRIG) in der Nummernverwaltung eingegeben worden ist, in der Nummernverwaltung (DNA) ausgelöst wird.

2. Verfahren nach Anspruch 1, **dadurch gekennzeichnet, daß** die Nummernverwaltung (DNA) die Zuordnung von Rufnummern zu sämtlichen Teilnehmeranschlüssen eines oder mehrerer Kommunikationsnetze (LN1, LN2) verwaltet.

3. Verfahren nach Anspruch 1, **dadurch gekennzeichnet, daß** die Nummernverwaltung (DNA) die Zuordnung der Rufnummern zu Teilnehmeranschlüssen von zwei oder mehr Kommunikationsnetzen (LN1, LN2) verwaltet, die sich einen gemeinsamen Rufnummern-Nummerierungsbereich teilen.

4. Verfahren nach Anspruch 3, **dadurch gekennzeichnet, daß** der Änderungsauftrag die Änderung der Zuordnung einer Rufnummer zu einem Teilnehmeranschluß (SA1) eines ersten (LN1) der Kommunikationsnetze auf eine Zuordnung der Rufnummer zu einem Teilnehmeranschluß (SA2) eines zweiten (LN2) der Kommunikationsnetze bewirkt.

5. Verfahren nach Anspruch 1, **dadurch gekennzeichnet, daß** überprüft wird, ob die Verbindung für das Übertragen der Trigger-Nachricht (TRIG) von einer definierten Ursprungsnummer zu einer definierten Zielrufnummer aufgebaut ist und nur dann die Durchführung des Änderungsauftrages ausgelöst wird.

6. Verfahren nach Anspruch 5, **dadurch gekennzeichnet, daß** die Ursprungsnummer diejenige Rufnummer ist, deren Zuordnung geändert wird.

7. Verfahren nach Anspruch 5, **dadurch gekennzeichnet, daß** die Ursprungsnummer eine Rufnummer einer geschlossenen Benutzergruppe ist.

8. Verfahren nach Anspruch 1, **dadurch gekennzeichnet, daß** in der Trigger-Nachricht (TRIG) eine Autorisierungskennung mitgesendet wird und nur dann die Ausführung des zwischengespeicherten Änderungsauftrages in der Nummernverwaltung (DNA) ausgelöst wird, wenn die gesendete Autorisierungskennung einer dem zwischengespeicherten Änderungsauftrag zugeordneten Autorisierungskennung entspricht.

9. Verfahren nach Anspruch 1, **dadurch gekennzeichnet, daß** dem Änderungsauftrag ein Zeitrahmen zugeordnet wird und die Ausführung des Änderungsauftrages nur ausgelöst wird, wenn die Trigger-Nachricht (TRIG) innerhalb des zugeordneten Zeitrahmens empfangen wird.

10. Verfahren nach Anspruch 1, **dadurch gekennzeichnet, daß** die Verbindung zu dem Teilnehmer-Endgerät über ein Mobilfunk-Netz (KN2) aufgebaut wird.

11. Nummernverwaltungseinrichtung (DNA) mit einer ersten Datenbank (DBM) zur Verwaltung der Zuordnung einer Vielzahl von Teilnehmeranschlüssen zu Rufnummern von Teilnehmern und mit einer Steuereinheit (LOG) zur Durchführung einer Änderung dieser Zuordnung durch die Ausführung eines Änderungsauftrages,
**dadurch gekennzeichnet, daß** die Steuereinheit (LOG) so ausgestaltet ist, daß sie eingegebene Änderungsoufträge, die jeweils die Änderung der Zuordnung einer der Teilnehmeranschlüsse zu der Rufnummer eines Teilnehmers beschreiben, zwischenspeichert, und daß die Steuereinheit (LOG) weiter so ausgestaltet ist, daß durch den Empfang einer Trigger-Nachricht (TRIG), die von einem Teilnehmer-Endgerät (TE) über eine zwischen dem Teilnehmer-Endgerät (TE) und der Nummernverwaltungseinrichtung (DNA) aufgebauten Verbindung empfangen wird, die Ausführung eines zwischengespeicherten Änderungsauftrages, der zu einem früheren Zeitpunkt als dem Empfang der Triggernachricht (TRIG) in der Nummernverwaltung eingegeben worden ist, durch die Steuereinheit (LOG) ausgelöst wird.

12. Nummernverwaltungseinrichtung nach Anspruch 11, **dadurch gekennzeichnet, daß** die erste Datenbank mit einer Schnittstelleneinrichtung versehen ist, die so ausgestaltet ist, daß sie einer oder mehreren Vermittlungsstellen einen Zugriff auf die erste Datenbank ermöglicht.

13. Nummernverwaltungseinrichtung nach Anspruch 12, **dadurch gekennzeichnet, daß** die erste Datenbank (DBM) mit einer Synchronisationseinrichtung (SYNC) zur Synchronisation von zwei oder mehreren zweiten Datenbanken (DB) mit der ersten Datenbank (DBM) versehen ist.

## Claims

1. Method for making changes in a numbers management (DNA), wherein in the method of numbers management (DNA) the assignment of a multiplicity of subscriber connections to call numbers of subscribers is managed, a change order is entered into the numbers management to make a change in this assignment and making the change is effected by carrying out the change order in the numbers management (DNA),
**characterised in that** a change order describing the change in assignment of one of the subscriber connections to the call number of a subscriber is intermediately stored in the numbers management, a connection between a subscriber terminal (TE) and the numbers management (DNA) is constructed and via the constructed connection a trigger message (TRIG) is sent from the subscriber terminal (TE) to the numbers management (DNA) and carrying out the intermediately stored change order, which was entered in the numbers management at an earlier time than the receipt of the trigger message (TRIG), is triggered in the numbers management (DNA) by the receipt of the trigger message (TRIG).

2. Method according to claim 1, **characterised in that** the numbers management (DNA) manages the assignment of call numbers to all the subscriber connections of one or more communication networks (LN1, LN2).

3. Method according to claim 1, **characterised in that** the numbers management (DNA) manages the assignment of call numbers to subscriber connections of two or more communication networks (LN1, LN2) which share a common call numbers numbering range.

4. Method according to claim 3, **characterised in that** the change order effects the change in assignment of a call number to a subscriber connection (SA1) of a first (LN1) of the communication networks to an assignment of the call number to a subscriber connection (SA2) of a second (LN2) of the communication networks.

5. Method according to claim 1, **characterised in that** a check is carried out as to whether the connection for transmitting the trigger message (TRIG) from a defined original number to a defined destination call number has been constructed and only then is the execution of the change order triggered.

6. Method according to claim 5, **characterised in that** the original number is the call number whose assignment is being changed.

7. Method according to claim 5, **characterised in that** the original number is a call number of a closed user group.

8. Method according to claim 1, **characterised in that** an authorisation identification is sent along with the trigger message (TRIG) and the execution of the intermediately stored change order is triggered in the numbers management (DNA) only if the sent authorisation identification corresponds to an authorisation identification assigned to the intermediately stored change order.

9. Method according to claim 1, **characterised in that** a timeframe is assigned to the change order and execution of the change order is triggered only if the trigger message (TRIG) is received within the assigned timeframe.

10. Method according to claim 1, **characterised in that** the connection to the subscriber terminal is constructed via a mobile radio network (KN2).

11. Numbers management device (DNA) with a first database (DBM) for managing the assignment of a multiplicity of subscriber connections to call numbers of subscribers and with a control unit (LOG) for making a change in this assignment by carrying out a change order,
**characterised in that** the control unit (LOG) is configured in such a way that it intermediately stores input change orders describing in each case the change in the assignment of one of the subscriber connections to the call number of a subscriber and the control unit (LOG) is further configured in such a way that by receipt of a trigger message (TRIG), received from a subscriber terminal (TE) via a connection constructed between the subscriber terminal (TE) and the numbers management device (DNA), carrying out an intermediately stored change order, which was input in the numbers management at an earlier time than the receipt of the trigger message (TRIG), is triggered by the control unit (LOG).

12. Numbers management device according to claim 11, **characterised in that** the first database is provided with an interface device which is configured in such a way that it enables access to the first database for one or more exchanges.

13. Numbers management device according to claim 12, **characterised in that** the first database (DBM) is provided with a synchronisation device (SYNC) for synchronising two or more second databases (DB) with the first database (DBM).

## Revendications

1. Procédé pour la mise en oeuvre de changements dans une gestion de numéros (DNA), l'affectation d'une pluralité de raccordements d'abonné à des numéros d'appel d'abonné étant gérée par le procédé de la gestion de numéros (DNA), un ordre de changement étant introduit dans la gestion de numéros pour la mise en oeuvre d'un changement de cette affectation et la mise en oeuvre du changement étant activée par l'exécution de l'ordre de changement dans la gestion de numéros (DNA), **caractérisé en ce qu'**un ordre de changement, qui décrit le changement de l'affectation d'un des raccordements d'abonné au numéro d'appel d'un abonné, est enregistré provisoirement dans la gestion de numéros, qu'une communication entre un appareil terminal d'abonné (TE) et la gestion de numéros (DNA) est établie et que via la communication établie est envoyé un message de déclenchement (TRIG) de l'appareil terminal d'abonné (TE) à la gestion de numéros (DNA) et que par la réception du message de déclenchement (TRIG) l'exécution de l'ordre de changement provisoirement enregistré, qui a été introduit à un instant antérieur à celui de la réception du message de déclenchement (TRIG) dans la gestion de numéros, est déclenchée dans la gestion de numéros (DNA).

2. Procédé selon la revendication 1, **caractérisé en ce que** la gestion de numéros (DNA) gère l'affectation de numéros d'appel à tous les raccordements d'abonné d'un ou de plusieurs réseaux de communication (LN1, LN2).

3. Procédé selon la revendication 1, **caractérisé en ce que** la gestion de numéros (DNA) gère l'affectation des numéros d'appel à des raccordements d'abonné de deux ou plusieurs réseaux de communication (LN1, LN2) qui se partagent une zone commune de numérotage de numéros d'appel.

4. Procédé selon la revendication 3, **caractérisé en ce que** l'ordre de changement active le changement de l'affectation d'un numéro d'appel à un raccordement d'abonné (SA1) d'un premier réseau de communication (LN1) sur une affectation du numéro d'appel à un raccordement d'abonné (SA2) d'un deuxième réseau de communication (LN2).

5. Procédé selon la revendication 1, **caractérisé en ce qu'**il est vérifié si la communication pour la transmission du message de déclenchement (TRIG) est établie par un numéro demandeur défini à un numéro demandé défini et que, seulement dans ce cas, est déclenchée la mise en oeuvre de l'ordre de changement.

6. Procédé selon la revendication 5, **caractérisé en ce que** le numéro demandeur est le numéro d'appel dont l'affectation sera changée.

7. Procédé selon la revendication 5, **caractérisé en ce que** le numéro demandeur est un numéro d'appel d'un groupe fermé d'utilisateurs.

8. Procédé selon la revendication 1, **caractérisé en ce qu'**un indice d'autorisation est envoyé dans le message de déclenchement (TRIG) et que l'exécution de l'ordre de changement enregistré provisoirement dans la gestion de numéros (DNA) n'est déclenchée que si l'indice d'autorisation envoyé correspond à un indice d'autorisation affecté à l'ordre de changement enregistré provisoirement.

9. Procédé selon la revendication 1, **caractérisé en ce qu'**un intervalle de temps est affecté à l'ordre de changement et que l'exécution de l'ordre de changement n'est déclenché que si le message de déclenchement (TRIG) est reçu pendant l'intervalle de temps affecté.

10. Procédé selon la revendication 1, **caractérisé en ce que** la communication à l'appareil terminal d'abonné est établie via un réseau de téléphonie mobile (CN2).

11. Dispositif de gestion de numéros (DNA) avec une première banque de banque de données (DBM) destinée à la gestion de l'affectation d'une pluralité de raccordements d'abonné à des numéros d'appel d'abonné et avec une unité de commande (LOG) destinée à la mise en oeuvre d'un changement de cette affectation par l'exécution d'un ordre de changement, **caractérisé en ce que** l'unité de commande (LOG) est équipée de manière qu'elle enregistre provisoirement des ordres de changement donnés qui décrivent à chaque fois le changement de l'affectation d'un des raccordements d'abonné au numéro d'appel d'un abonné, et **en ce que** l'unité de commande (LOG) est de plus équipée de manière que, suite à la réception d'un message de déclenchement (TRIG) qui est reçu par un appareil terminal d'abonné (TE) via une communication établie entre l'appareil terminal d'abonné (TE) et le dispositif de gestion de numéros (DNA), soit déclenchée par l'unité de commande (LOG) l'exécution d'un ordre de changement provisoirement enregistré qui a été introduit à une date antérieure à la réception du message de déclenchement (TRIG) dans la gestion de numéros.

12. Dispositif de gestion de numéros selon la revendication 11, **caractérisé en ce que** la première banque de données est pourvue d'un dispositif d'interface qui est équipé de manière qu'il permette à un ou plusieurs centraux de commutation un accès à la première banque de données.

13. Dispositif de gestion de numéros selon la revendication 12, **caractérisé en ce que** la première banque de données (DBM) est pourvue d'un dispositif de synchronisation (SYNC) destiné à la synchronisation de deux ou plusieurs deuxièmes banques de données (DB) avec la première banque de données (DBM).
